Europäisches Patentamt

(19) European Patent Office

Office européen des brevets

(11) EP 1 495 802 A1

(12) **EUROPEAN PATENT APPLICATION**
published in accordance with Art. 158(3) EPC

(43) Date of publication:
12.01.2005 Bulletin 2005/02

(51) Int Cl.⁷: **B01J 23/76**, B01J 23/80,
C01B 3/40

(21) Application number: 03715625.4

(22) Date of filing: 28.03.2003

(86) International application number:
PCT/JP2003/004042

(87) International publication number:
WO 2003/086627 (23.10.2003 Gazette 2003/43)

(84) Designated Contracting States:
AT BE BG CH CY CZ DE DK EE ES FI FR GB GR
HU IE IT LI LU MC NL PT RO SE SI SK TR
Designated Extension States:
AL LT LV MK

(30) Priority: 29.03.2002 JP 2002096080

(71) Applicant: Kyushu Electric Power Co., Inc.
Fukuoka-ken 810-0004 (JP)

(72) Inventors:
• UCHIDA, Yoshitaka,
KYUSHU ELEC. POWER CO., INC.
Fukuoka, Fukuoka 815-8520 (JP)
• TSUJIMOTO, Keigo,
KYUSHU ELEC. POWER CO., INC.
Fukuoka, Fukuoka 815-8520 (JP)

(74) Representative: Goddar, Heinz J., Dr.
FORRESTER & BOEHMERT
Pettenkoferstrasse 20-22
80336 München (DE)

(54) **MODIFICATION CATALYST COMPOSITION**

(57) Disclosed is a reforming-catalyst composition, which comprises nickel oxide and lanthanum oxide as a catalytic material for inducing a reaction between stream and either one of methane, natural gas and town gas to produce a hydrogen-containing gas. The nickel oxide and lanthanum oxide are formed as a perovskite-structured compound partly or in their entirety. The reforming-catalyst composition may include an oxide consisting of either one of alumina, silica and zirconia, on which the perovskite-structured compound is formed to serve as a catalyst carrier. Further, the reforming-catalyst composition may include nickel or ruthenium supported by aforesaid catalyst carrier consisting of the perovskite-structured compound. The reforming-catalyst composition of the present invention allows highly concentrated hydrogen to be produced at a low S/C ratio in steam reforming of methane, natural gas or town gas, while maintaining catalytic activity over a long time-period.

**Description**

**TECHNICAL FIELD**

The present invention relates to a reforming-catalyst composition allowing hydrogen to be effectively produced in a hydrogen production process based on steam reforming of methane, natural gas or town gas, while maintaining catalytic activity over a long time-period.

**BACKGROUND ART**

In late years, new energy technologies have been actively developed in connection with environmental concerns. As one of the new energy technologies, there has been proposed a proton-exchange membrane fuel cell (PEFC or PEM fuel cell) having a low operating temperature of 100°C or less, and an excellent activation/deactivation performance. In terms of fuels to be used therein, the PEM fuel cell is classified into two types: a pure-hydrogen type incorporating no fuel-reforming unit, and a hydrocarbon (natural gas, LP gas, kerosene, etc.) reforming type. Under the present circumstances having no hydrogen supply infrastructure, the hydrocarbon-reforming type capable of using existing fuel (kerosene etc.) supply infrastructures is regarded as more realistic or viable in the immediate future.

A process for hydrogen production from hydrocarbon typically comprises steam reforming, CO (carbon monoxide) conversion, CO selective oxidation and absorption/separation. Among these steps, a hydrocarbon (e.g. methane) stream-reforming reaction is performed based on the following reaction formulas (1) and (2):

$$CH_4 + H_2O \rightarrow CO + 3H_2 - 205.8 \text{ kJ/mol} \tag{1}$$

$$CO + H_2O \rightarrow CO_2 + H_2 + 41.1 \text{ kJ/mol} \tag{2}$$

The reaction (1) is an endothermic reaction, and essentially performed at a high temperature of 700 to 900°C for the reason of thermal equilibrium etc. In the reaction (1), Ni/alumina catalysts have been widely used since a long time ago (see, for example, Japanese Patent Laid-Open Publication No. 04-363140). In view of the reforming process to be performed under a high temperature, it is critical to suppress deterioration of the reforming catalyst so as to provide improved life-duration or durability.

While factors of deterioration in the reforming catalyst have not been clarified up to now, it is generally believed that such deterioration is caused by sintering of nickel and/or precipitation of carbonaceous substances. As measures against this problem, it has been attempted to use noble metal, such as ruthenium, (see, for example, Japanese Patent Laid-Open Publication No. 10-52639), to form the catalyst as a Ni-Mg-O-based solid solution (see, for example, Japanese Patent Laid-Open Publication No. 09-77501), or to form the catalyst as a Ni/CaTiO$_3$ perovskite-structured oxide (see, for example, Japanese Patent Laid-Open Publication No. 10-194703).

As another measure, the reaction is performed under the condition of a steam/carbon mol ratio (hereinafter referred to as "S/C ratio" for brevity) of 3 or more, to prevent the precipitation of carbon. In view of energy saving, it is desired to allow a reformer to be operated at a lower S/C ratio over a long time-period, and to provide a catalyst having enhanced durability even under this condition. However, it is difficult for conventional catalysts to satisfy such a need sufficiently.

**DISCLOSURE OF INVENTION**

It is an object of the present invention to provide a reforming-catalyst composition allowing highly concentrated hydrogen to be produced at low S/C ratio in stream reforming of methane, natural gas or town gas, while maintaining catalytic activity over a long time-period.

In order to achieve this object, the present invention provides a reforming-catalyst composition comprising nickel oxide and lanthanum oxide which serve as a catalytic material for inducing a reaction between steam and either one of methane, natural gas and town gas to produce a hydrogen-containing gas. The nickel oxide and lanthanum oxide are formed as a perovskite-structured compound partly or in their entirety.

The reforming-catalyst composition of the present invention may include an oxide consisting of either one of alumina, silica and zirconia, on which the perovskite-structured compound is formed to serve as a catalyst carrier.

Further, the reforming-catalyst composition of the present invention may include nickel or ruthenium supported by a catalyst carrier consisting of the perovskite-structured compound.

For example, the perovskite-structured compound in the present invention may be prepared through a coprecipitation process as follows. An inorganic salt compound, such as a nitrate salt of Ni or La, is dissolved in water to form a complete metallic salt solution. Simultaneously, either one of carbonate, bicarbonate, oxalate and hydroxide of sodium or potassium, preferably sodium carbonate, is dissolved in water of 60°C under stirring to form a precipitant solution. Then, the metallic salt solution is dripped into the precipitant solution at 60°C to form a precipitate. The obtained precipitate is filtered, and repeatedly rinsed with water. Then, the precipitate is dried at a temperature of 80°C or more for 16 hours. Subsequently, the dried precipitate is burnt in a muffle furnace at 800°C for 2 hours to obtain a $LaNiO_3$ perovskite-type oxide compound serving as a catalyst carrier.

The perovskite-type compound may be formed on alumina, silica, titania or zirconia, through the following process. A sol or hydroxide of each of the above oxides is mixed with the aforementioned precipitant solution, and a metallic salt solution is dripped into the mixture to form a precipitate. Then, the aforementioned process is performed to obtain a $LaNiO_3$ perovskite-type compound serving as a catalyst carrier.

Any suitable conventional process, such as an impregnation process, may be used to allow nickel or ruthenium to be supported on the above carrier.

The nickel may include metallic salts, such as nickel chloride, nickel nitrate, nickel sulfate or nickel oxalate. In particular, nickel nitrate is preferable in that it can reduce negative ions to be created on a catalytic material after thermal decomposition. The amount of nickel to be supported is set in the range of 0.1 to 10 mass%. If the amount of nickel is less than 0.1 mass%, an effect of improving catalytic activity cannot be sufficiently obtained. If the amount of nickel is greater than 10 mass%, the catalytic activity will not be improved in proportion to increase in the amount, and carbon will be increasingly precipitated. In view of these phenomenons, the amount of nickel is optimally set in the range of 1 to 10 mass%.

Similarly, the ruthenium may include metallic salts, such as ruthenium chloride or ruthenium nitrate. In particular, ruthenium chloride hydrate is preferable in view of solubility and easiness in handling. While the amount of ruthenium to be supported may be in the range of 0.5 to 5 mass%, it is optimally set in the range of 0.5 to 3 mass% for the same reasons as those in nickel.

For example, the nickel may be supported on the perovskite-type carrier through a conventional impregnation process, as follows. The aforementioned $LaNiO_3$ compound carrier is impregnated with an aqueous solution containing a given amount of nickel nitrate, and the impregnated solution is evaporated to dryness. Then, the dried compound with nickel nitrate is burnt in a muffle furnace at 500°C for 2 hours to obtain a catalyst. The ruthenium may be supported on the perovskite-type carrier in the same way.

The obtained catalyst powder is molded using a compression-molding machine. Then, the obtained molded product is cut to have a size of about 2 to 3 mm, and used to provide a catalytic reaction.

In the steam reforming process, the S/C ratio is set in the range of 0.5 to 5, preferably in the range of 1 to 2. Further, an inert gas, such as nitrogen gas, may coexist as a diluent. These reactive gases are supplied to a reactor filled with the catalyst to induce a catalytic reaction typically at a temperature of 500 to 1000°C, preferably 700 to 900°C. The reaction pressure is set typically in the range of normal pressures to 3 MPa, preferably in the range of normal pressures to 1 MPa. The space velocity (GHSV) of the reaction gases is set in the range of 500 to 200000 $h^{-1}$, preferably in the range of 5000 to 100000 $h^{-1}$. While methane contained in natural gas is typically used, it may be produced from coal or biomass. The catalyst according to the present invention may be implemented in the form of any of a fixed bed, moving bed and fluidized bed. While the present invention will be specifically described in more detail in conjunction with the following examples, it should be understood that the present invention is not limited to such examples.

**BEST MODE FOR CARRYING OUT THE INVENTION**

**[INVENTIVE EXAMPLE 1]**

19.08 g of sodium carbonate was dissolved in 225 ml of water, and 6.82 g of alumina sol (Alumina Sol 520: 30% $Al_2O_3$; available from Nissan Chemical Industries, Ltd.) was added into the solution. The obtained solution is heated up to 60°C under stirring. Then, an aqueous solution prepared by dissolving 21.65 g of lanthanum nitrate hexahydrate and 14.54 g of nickel nitrate hexahydrate in 182 ml of water was added to the above solution containing sodium carbonate, in small amounts, to form a precipitate, and the mixture was continuously stirred at 60°C for 1 hour. The obtained precipitate was filtered, and repeatedly rinsed with hot water. After the filtrate has a pH of 8 or less, the precipitate was dried at 80°C for 16 hours. Then, the dried precipitate was burnt at 800°C for 2 hours to obtain a catalyst carrier having a $LaNiO_3$ perovskite structure.

3.00 g of the obtained carrier powder was put in an aqueous solution prepared by dissolving 0.299 g of nickel nitrate hexahydrate in 9 ml of water, and the mixture was evaporated to dryness. Then, the carrier with nickel nitrate hexahydrate was dried at 80°C for 12 hours or more, and burnt at 500°C for 2 hours to obtain a 2% $Ni/LaNiO_3$-$Al_2O_3$

catalyst.

**[INVENTIVE EXAMPLE 2]**

Except that 1.49 g of nickel nitrate hexahydrate was used in the process of impregnating and supporting nickel, the same process as that in Inventive Example 1 was performed to obtain a 10% $Ni/LaNiO_3-Al_2O_3$ catalyst.

**[INVENTIVE EXAMPLE 3]**

Except that 150.33 g of silica sol (SNOWTEX: 0.20% $SiO_2$; available from Nissan Chemical Industries, Ltd.) was used as a substitute for Alumina Sol in Inventive Example 2, the same process as that in Inventive Example 2 was performed to obtain a 10% $Ni/LaNiO_3-SiO_2$ catalyst.

**[INVENTIVE EXAMPLE 4]**

Except that 3.97 g of Zr $(OH)_4$ (available from Shin Nippon Metal & Chemical Co., Ltd.) was used as a substitute for Alumina Sol in Inventive Example 2, the same process as that in Inventive Example 2 was performed to obtain a 10% $Ni/LaNiO_3-ZrO_2$ catalyst.

**[COMPARATIVE EXAMPLE 1]**

Except that 10.28 g of titania (ST-01: available from Ishihara Sangyo Kaisha, Ltd.) was used as a substitute for Alumina Sol in Inventive Example 2, the same process as that in Inventive Example 2 was performed to obtain a 10% $Ni/LaNiO_3-TiO_2$ catalyst.

**[COMPARATIVE EXAMPLE 2]**

Except that 3.00g of $\alpha$-alumina prepared by burning commercially available alumina of 2 to 3 $\varphi$ (NK 124: available from Sumitomo Chemical Co., Ltd.) at 1200°C for 2 hours was used as a substitute for Alumina Sol in Inventive Example 1, the same process as that in Inventive Example 1 was performed to obtain a 2% $Ni/\alpha$-alumina catalyst.

**[COMPARATIVE EXAMPLE 3]**

Except that 3.00g of $\alpha$-alumina prepared by burning commercially available alumina of 2 to 3 $\varphi$ (NK 124: available from Sumitomo Chemical Co., Ltd.) at 1200°C for 2 hours was used as a substitute for Alumina Sol in Inventive Example 2, the same process as that in Inventive Example 2 was performed to obtain a 10% $Ni/\alpha$-alumina catalyst.
A screening test on a steam-reforming reaction of methane was performed as follows. 2 ml of each of the above catalysts molded to have a size of 2 to 3 mm was filled in a stainless reaction tube having an inner diameter of 10 $\varphi$, and reduced in a hydrogen stream at 800°C for 2 hours. Then, a reaction test was performed to check the initial activity of each of the catalysts under the following conditions.

(Reaction Conditions)

Reaction Temperature: 800°C
Reactive Gas: 20.6% $CH_4$-20.6% $H_2O$-58.8% $N_2$, $H_2O/CH_4$ (mol ratio) =1, GHSV = 10000 $h^{-1}$; normal pressures
A resulting reaction product was analyzed by gas chromatography. The concentration of hydrogen in the reaction product after 5 hours from the initiation of the reaction is shown in Table 1.

Table 1

|  | Catalyst catalyst | Hydrogen Concentration in Reaction Product (%) |
|---|---|---|
| Inventive Example 1 | 2% $Ni/LaNiO_3-Al_2O_3$ | 40.9 |
| Inventive Example 2 | 10% $Ni/LaNiO_3-Al_2O_3$ | 40.8 |
| Inventive Example 3 | 10% $Ni/L.aNiO_3-SiO_2$ | 34.0 |
| Inventive Example 4 | 10% $Ni/LaNiO_3-ZrO_2$ | 34.2 |

Table 1   (continued)

|  | Catalyst catalyst | Hydrogen Concentration in Reaction Product (%) |
|---|---|---|
| Comparative Example 1 | 10% Ni/LaNiO$_3$-TiO$_2$ | 24.9 |
| Comparative Example 2 | 2% Ni/$\alpha$-Al$_2$O$_3$ | 33.3 |
| Comparative Example 3 | 10% Ni/$\alpha$-Al$_2$O$_3$ | 31.3 |

As seen in Table 1, the reforming-catalyst compositions in Inventive Examples 1 to 4 have a higher hydrogen concentration than that of the reforming-catalyst compositions in Comparative Examples 1 to 3.

**[INVENTIVE EXAMPLE 5]**

Except that an impregnation process was performed using 0.075 g of ruthenium chloride (40% Ru) as a substitute for the impregnation process using nickel nitrate in Inventive Example 1, the same process as that in Inventive Example 1 was performed to obtain a 1% Ru/LaNiO$_3$-Al$_2$O$_3$ catalyst.

**[Comparative Example 4]**

5.1 g of $\alpha$-alumina obtained in Comparative Example 2 was impregnated with 15 ml of 0.375 N-NaOH aqueous solution, and the $\alpha$-alumina impregnated with the aqueous solution was vacuum-dried in an evaporator at 55°C for 40 minutes. The dried $\alpha$-alumina was immersed in 4 ml of aqueous solution containing 0.13 g of ruthenium chloride (40% Ru) dissolved therein, and repeatedly dried to allow the ruthenium chloride to be entirely absorbed in the $\alpha$-alumina. Then, the $\alpha$-alumina with ruthenium chloride was subjected to hydrazine reduction, and dried at 80°C for 16 hours to obtain a 1% Ru/$\alpha$ Al$_2$O$_3$ catalyst.

**[Continuous Steam Reforming Reaction of Methane]**

The steam reforming reaction of methane was continuously performed using 1.2 ml of the catalysts in Inventive Examples 1 and 5 and Comparative Examples 2 and 4 under the following conditions to evaluate the durability of catalytic activity.

**[Reaction Conditions]**

Reduction Treatment Temperature: 700° C
Reaction Temperature: 700°C
Reactive Gas: 20.6% CH$_4$-30.9% H$_2$O-48.5% N$_2$, H$_2$O/CH$_4$ (mol ratio) =1.5, GHSV = 11250 h$^{-1}$; normal pressures
The catalytic activity was analyzed by gas chromatography. The result is shown in Table 2.

Table 2

| | Catalyst | | Activity | | | | | |
|---|---|---|---|---|---|---|---|---|
| Inventive Example 1 | 2% Ni/LaNiO$_3$ Al$_2$O$_3$ | Time (h) | 72 | 138 | 175 | 220 | 266 | 298 |
| | | CH$_4$ conversion ratio (%) | 88.9 | 89.4 | 85.4 | 86.8 | 92.3 | 93.6 |
| Comparative Example 2 | 2% Ni/$\alpha$-Al$_2$O$_3$ | Time (h) | 74 | 130 | 185 | 215 | 240 | |
| | | CH$_4$ conversion ratio (%) | 86.0 | 76.8 | 73.6 | 70.1 | 69.7 | |
| Inventive Example 5 | 1% Ru/LaNiO$_3$-Al$_2$O$_3$ | Time (h) | 40 | 96 | 144 | 191 | 236 | |
| | | CH$_4$ conversion ratio (%) | 93.2 | 94.1 | 94.6 | 91.7 | 89.6 | |

Table 2 (continued)

| Catalyst | | | Activity | | | | | |
|---|---|---|---|---|---|---|---|---|
| Comparative Example 4 | 1% Ru/$\alpha$-Al$_2$O$_3$ | Time (h) | 45 | 94 | 144 | 191 | 212 | |
| | | CH$_4$ conversion ratio (%) | 91.4 | 81.8 | 74.2 | 46.1 | 35.7 | |

As seen in Table 2, the reforming-catalyst compositions in Inventive Examples 1 and 5 have a lower deterioration of catalytic activity than that of the reforming-catalyst compositions in Comparative Examples 2 and 4.

**INDUSTRIAL APPLICABILITY**

The reforming-catalyst composition of the present invention can be used to highly concentrated hydrogen to be produced at a low S/C ratio while maintaining stable catalytic activity over a long time-period. Thus, the reforming-catalyst composition is effective to a hydrogen production process based on steam reforming of methane, natural gas or town gas.

**Claims**

1. A reforming-catalyst composition comprising nickel oxide and lanthanum oxide which serve as a catalytic material for inducing a reaction between stream and either one of methane, natural gas and town gas to produce a hydrogen-containing gas, said nickel oxide and lanthanum oxide being formed as a perovskite-structured compound partly or in their entirety.

2. The reforming-catalyst composition as defined in claim 1, which includes an oxide consisting of either one of alumina, silica and zirconia, on which said perovskite-structured compound is formed to serve as a catalyst carrier.

3. The reforming-catalyst composition as defined in claim 1, which includes nickel supported by a catalyst carrier including said perovskite-structured compound.

4. The reforming-catalyst composition as defined in claim 1, which includes ruthenium supported by a catalyst carrier including said perovskite-structured compound.

**EP 1 495 802 A1**

## INTERNATIONAL SEARCH REPORT

| | International application No. |
|---|---|
| | PCT/JP03/04042 |

**A. CLASSIFICATION OF SUBJECT MATTER**
Int.Cl$^7$  B01J23/76, 23/80, C01B3/40

According to International Patent Classification (IPC) or to both national classification and IPC

**B. FIELDS SEARCHED**

Minimum documentation searched (classification system followed by classification symbols)
Int.Cl$^7$  B01J21/00-38/74, C01B3/40

Documentation searched other than minimum documentation to the extent that such documents are included in the fields searched

| | | | |
|---|---|---|---|
| Jitsuyo Shinan Koho | 1926-1996 | Toroku Jitsuyo Shinan Koho | 1994-2003 |
| Kokai Jitsuyo Shinan Koho | 1971-2003 | Jitsuyo Shinan Toroku Koho | 1996-2003 |

Electronic data base consulted during the international search (name of data base and, where practicable, search terms used)
JSTPlus(JOIS)

**C. DOCUMENTS CONSIDERED TO BE RELEVANT**

| Category* | Citation of document, with indication, where appropriate, of the relevant passages | Relevant to claim No. |
|---|---|---|
| X<br>Y | CHOUDHARY V.R. et al., Oxidative Conversion of Methane to Syngas over LaNiO3 Perovskite with or without Simultaneous Steam and CO2 Reforming Reactions: Influence of Partial Substitution of La and Ni, JOURNAL OF CATALYSIS, 1996, Vol.163, No.2, pages 312 to 318 | 1<br>2-4 |
| Y | WO 00/43121 A1  (IMPERIAL CHEMICAL INDUSTRIES PLC),<br>27 July, 2000 (27.07.00),<br>Full text<br>& US 2002/42340 A1 | 2-4 |
| Y | JP 56-54205 A  (Hitachi, Ltd.),<br>14 May, 1981 (14.05.81),<br>Full text<br>(Family: none) | 2-4 |

| ☒ Further documents are listed in the continuation of Box C. | ☐ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier document but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 09 July, 2003 (09.07.03) | 05 August, 2003 (05.08.03) |

| Name and mailing address of the ISA/ | Authorized officer |
|---|---|
| Japanese Patent Office | |
| Facsimile No. | Telephone No. |

Form PCT/ISA/210 (second sheet) (July 1998)

**EP 1 495 802 A1**

## INTERNATIONAL SEARCH REPORT

| International application No. |
| --- |
| PCT/JP03/04042 |

| C (Continuation). DOCUMENTS CONSIDERED TO BE RELEVANT | | |
| --- | --- | --- |
| Category* | Citation of document, with indication, where appropriate, of the relevant passages | Relevant to claim No. |
| Y | JP 58-119345 A (Hitachi, Ltd.),<br>15 July, 1983 (15.07.83),<br>Full text<br>(Family: none) | 2-4 |
| Y | JP 10-216521 A (Mitsubishi Heavy Industries, Ltd.),<br>18 August, 1998 (18.08.98),<br>Full text<br>(Family: none) | 2-4 |
| X | H.PROVENDIER et al., Catalytic behavior of Ni containing catalysts in vaporeforming of methane with low H20/CH4 ratio and free carbon deposition, Stud.Surf.Sci.Catal., 2000, Vol.130A, pages 683 to 688 | 1,3 |
| A | JP 1-148343 A (Shingijutsu Kaihatsu Jigyodan, et al.),<br>09 June, 1989 (09.06.89),<br>Claims<br>(Family: none) | 1-4 |

Form PCT/ISA/210 (continuation of second sheet) (July 1998)